# EUROPÄISCHE PATENTSCHRIFT

(11) **EP 0 184 159 B1**
(45) Veröffentlichungstag und Bekanntmachung des Hinweises auf die Patenterteilung: **19.01.1994**
(21) Anmeldenummer: 85115195.1
(22) Anmeldetag: 29.11.1985
(51) Int. Cl.: G11B 33/02, G11B 33/12, G11B 33/14, G11B 25/04

(54) **Integriertes Antriebssystem für Festplattenspeicher**
Integrated drive system for hard disk memory
Système d'entraînement intégré pour mémoire à disque dur

(30) Priorität: 29.11.1984 CH 5685/84; 21.12.1984 DE 3446907; 10.05.1985 US 733218
(43) Veröffentlichungstag der Anmeldung: 11.06.1986
(73) Patentinhaber: PAPST-MOTOREN GmbH & Co. KG, 78106 St Georgen (DE)
(72) Erfinder: Cap, Heinrich, D-7742 St. Georgen-Peterzell (DE); Papst, Georg Friedrich, D-7742 St. Georgen (DE); Zuckschwert, Edgar, D-7742 St. Georgen (DE)
(74) Vertreter: Henkel, Feiler, Hänzel & Partner

(56) Entgegenhaltungen:
- EP-A- 0 069 545
- DE-A- 2 740 300
- DE-A- 3 314 079
- US-A- 3 888 403
- PATENT ABSTRACTS OF JAPAN, Band 7, Nr. 282 (P-243)[1427], 16. Dezember 1983 & JP-A-58-159 201
- FEINWERKTECHNIK & MESSTECHNIK, Band 93, Nr. 6, August/September 1985, Seiten 40,43,44,46,48,50; München, DE; H. WALDMÜLLER: "NC-Transferbearbeitung eines Lagerblocks- Trägerbaustein des Video-Recorders"

## Beschreibung

Die Erfindung betrifft ein integriertes Antriebssystem mit den Merkmalen des Oberbegriffs des Anspruchs 1 bzw. ein Verfahren zur Herstellung eines derartigen Antriebssystems mit den Merkmalen des Oberbegriffs des Anspruchs 18.

In gattungsgemäßen Geräten müssen die Informationsträger selbst und auch die Aufnahme- und Abfragesensoren (Leseköpfe) selbst und auch die Aufnahme- und Abfragesensoren (Leseköpfe) sehr exakt bewegt und also sehr genau geführt werden. So müssen in magnetischen Impulsaufzeichnungsgeräten die Antriebsachsen für Magnetplatten äußerst genau zueinander justiert sein, was durch die hohe Dichte der Informationen bedingt ist, die im Speichermedium aufgezeichnet sind. Es wurden für die Parallelität von Wellen und die Winkeligkeit von Plattenauflageebenen Werte im um-Bereich gefordert. Speziell die Hauptantriebsachsen von magnetischen Impulsaufzeichnungsgeräten müssen - was den Rundlauf der Wellen in ihrem Lagersystem anbelangt - sehr hohen Anforderungen genügen, und durch Taumeln der Wellen hervorgerufene Fehler dürfen z.B. 5/10.000 mm nicht überschreiten.

EP-069 545 offenbart ein Wechselplattenspeichergerät mit einem Gerätechassis, das eine Lagerbohrung zur Stützung des Motors für den Antrieb des Aufzeichnungsträgers und eine andere Lagerbohrung zur Stützung des Motors für den Antrieb des Aufzeichnungskopfes aufweist. Die Lagerbohrungen und Befestigungsteile der Motoren sind einstückig mit dem Gerätechassis hergestellt.

Allerdings ist dieses Chassis nicht in einer einzigen Einspannung mit der erforderlichen Genauigkeit herstellbar, da ein auf einer Seite der Lagerbohrungen eingeführter Werkzeugstahl aufgrund der Länge der Lagerbohrungen beim Drehen der von der Einführseite abliegenden Lagersitze nachfedert, so daß die Rundheit und die Parallelität der Lagersitze der beiden Lagerbohrungen nicht gewährleistet werden kann.

Dies hat zur Folge, daß das bekannte Gerätechassis, um den hohen Genauigkeitsanforderungen hinsichtlich der Maßhaltigkeit der Lagerbohrungen und der Lagersitze wenigstens ausreichend gerecht zu werden, von zwei Seiten zu bearbeiten ist, was ein Umspannen des Werkstücks bedeutet.

Damit ist jedoch eine zwangsläufige - wenn auch gegenüber dem Fehler durch Nachfedern des Werkzeuges geringere - Reduzierung der Genauigkeit, ein erhöhter Fertigungsaufwand und ein damit einhergehender Kostenfaktor verbunden.

Demgegenüber dient die Erfindung dazu, Festplatten der eingangs genannten Art in großer Stückzahl mit minimalen Toleranzen kostengünstig herzustellen.

Diese Aufgabe wird bei Festplattenspeichern der oben genannten Art erfindungsgemäß durch die Merkmale des kennzeichnenden Teils des Anspruchs 1 bzw. bei dem Herstellungsverfahren nach Anspruch 18 durch die Merkmale des kennzeichnenden Teils des Anspruchs 18 gelöst.

Das Gerätechassis und das Befestigungsteil für den Motor, insbesondere der Motorflansch, werden in bevorzugter Weise aus Metall gegossen oder aus Kunststoff gespritzt, gegossen oder gepreßt.

Bei dem erfindungsgemäßen integrierten Antriebssystem bestehen also das Gerätechassis und der Motorflansch aus einem Teil, so daß sie gemeinsam bearbeitet werden können. Wenn mehr als ein Motor für das Antriebssystem benötigt wird, dann sind die Motorflansche aller Motoren ebenfalls einstückig mit dem Gerätechassis ausgebildet.

Beim Nachbearbeiten der in das Gerätechassis gegossenen Bohrungen für sämtliche Lagerwellen und Achsen braucht das Gerätechassis nicht umgespannt zu werden, was einerseits eine genaue Lage der einzelnen Bohrungen zueinander erlaubt und andererseits zu einer Kostensenkung führt.

Infolge der Integration der Motorflansche in das Gerätechassis sind Bearbeitungstoleranzen möglich, die kleiner sind als die Summe der Toleranzen der einzelnen Werkstücke bzw. Teile. Auch infolge dieser kleineren "Summentoleranz", die mit dem integrierten Antriebssystem wesentlich einfacher einzuhalten ist, können die Kosten gesenkt werden, d.h. es kann ein günstiges Verhältnis von Aufwand zu Leistung erzielt werden.

Ebenso ist es mit dem erfindungsgemäßen integrierten Antriebssystem möglich, auch eine Kopfbetätigungsachse genau parallel zu einer Plattenachse festzulegen oder in einem Plattenspeichergerät die voice-coil-Führungskanten, im allgemeinen senkrecht zur Plattenachse dadurch preiswert und genau zu gewinnen, daß sie - in oben genannter gemeinsamer Bearbeitung - direkt ins Chassis eingelassen, vorzugsweise durch Fräsen unmittelbar eingearbeitet sind.

Eine Weiterbildung der Erfindung besteht darin, daß durch Formgebung und Materialwahl des Gerätechassis einerseits und der auf diesem montierten Teile andererseits der Temperaturgang, also die Wärmeausdehnung der einzelnen Bauteile, kompensierbar ist. Auf diese Weise wird ein von Temperaturschwankungen seiner Umgebung praktisch nicht beeinflußbares integriertes Antriebssystem für Festplattenspeicher geschaffen.

Das Gerätechassis ist also Träger für alle aktiven und passiven Antriebsteile, für zusätzlich benötigte Hilfsteile und gegebenenfalls auch für eine Steuerelektronik.

Das Gerätechassis kann aus Metall oder Kunststoff bestehen. Als Metall wird in bevorzugter Weise Aluminium verwendet. Es hat sich nun gezeigt, daß insbesondere bei einem aus Aluminium bestehenden Gerätechassis Temperatureinflüsse eine Veränderung von Lagerflächen zur Folge haben können, die sich in einem sogenannten "Abkippen" beispielsweise der Rotationsachse eines Motors zu einer ebenen Auflagefläche für Platten, also in einer Veränderung der Rechtwinkligkeit zwischen der Rotationsachse einer Plattenstapelnabe und der Auflagefläche der Festplatten auf dieser Nabe äußern können. Diese Temperatureinflüsse können durch größere Anderungen der Umgebungstemperatur bedingt sein oder ihre Ursache im Geräteinnern und speziell im Lagerinnern haben, wenn zum Beispiel der äußere Lagerring eine gegenüber dem Werkstoff des Gerätechassis (z.B. Aluminium) wesentlich abweichende Wärmeausdehnung hat. Um nun solche negativen Temperatureinflüsse auszuschalten und speziell zu gewährleisten, daß die Auflagefläche für den Plattenstapel am R and selbst bei Temperaturschwankungen von 60°C nicht mehr als 5 µm Differenz (bezogen auf einen Durchmesser des Hubs von 40 mm) von der zur Rotationsachse genau rechtwinklingen Ebene durch den Mittelpunkt der Auflagefläche hat, ist in einer besonders vorteilhaften Weiterbildung der Erfindung vorgesehen, daß der Motor über eine mit den Lagerflächen verbundene und vorzugsweise aus Stahl bestehende Hülse an dem Befestigungsteil angebracht ist, vorzugsweise mittels Klebung.

Der Klebstoffilm besteht aus einer hochviskosen, anaeroben Flüssigkeit und hat eine Dicke von 2 bis 30 µm, vorzugsweise 2 bis 20 µm, d.h., der Klebstoffilm ist möglichst dünn ausgebildet.

Es ist von entscheidender Bedeutung, daß der Klebstofffilm in einer sehr genauen Zylinderbohrung, also der Lagerfläche des einstückig mit dem Gerätechassis gestalteten Befestigungsteiles sitzt, da er nur dann ausreichend dünn ausgestaltet werden kann. Eine größere Dicke des Klebstoffilms würde nämlich außerdem die Position des Plattenstapels im Gerät nicht stabil und genau genug sein lassen.

Um die Fläche für den Klebstoffilm zu verlängern, kann der Motor wenigstens teilweise in einer im Gerätechassis vorgesehenen Wanne untergebracht werden. Auf diese Weise kann trotzdem eine niedrige Bauhöhe gewährleistet werden.

Um die Bauhöhe möglichst gering zu halten, kann der Motor in seiner Leistung dadurch verstärkt werden, daß als Motormagnet ein kunststoffgebundener SmCo-Magnet dient, wobei der axial darunter sich anschließende Signalmagnet ein kunststoffgebundener Ferritring sein kann. Bei kunststoffgebundenen Seltenen Erdmagneten (wie SmCo) ist es aber nicht möglich, axial lange Ringe zu machen. Es ist also besser, kurze Ringe in beliebiger Weise zu staffeln. Die Ringe müssen nun unabhängig von ihrer Position vor der Montage magnetisiert werden, wenn eine Magnetisierung im eingebauten Zustand vermieden werden soll. Eine solche Vormagnetisierung erfordert nun, daß die Ringe zueinander eine exakte umfangsmäßige Position haben, damit ihre Polaritäten sich nicht stören. Zu diesem Zweck sind axiale Nuten und Nasen an einer Stelle ihres Umfangs vorgesehen. Eine solche axiale Nut oder Nase kann - wenn eine Vormagnetisierung vermieden werden soll - auch der darunterliegende Signal-magnetring haben, denn auch dieser muß ja zur Rotormagnetisierung in einer richtigen Umfangsposition angeordnet sein.

Das Befestigungsteil kann Lager- und/oder Führungsflächen für verschiedene Motoren haben. Ebenso können in Hülsen Motoren für beispielsweise drei und sechs Platten untergebracht werden.

Nachfolgend wird die Erfindung anhand der Zeichnung näher erläutert. Es zeigen:
- Fig. 1A und 1B: in Draufsicht (Fig. 1A) und Schnitt (Fig.1B) ein Ausführungsbeispiel für einen Festplattenspeicher mit einem Motor und zwei Führungsschlitzen für die voice-coil-Motoren.
- Fig. 2: ein weiteres Ausführungsbeispiel der Erfindung mit einem Plattenspeichermotor mit hängender Außenrotorglocke und einem voice-coil-Motor, und
- Fig. 3 und 4 bzw. 5 und 6: jeweils ein Ausführungsbeispiel der Erfindung mit einer mit Führungsflächen verklebten Stahlhülse.

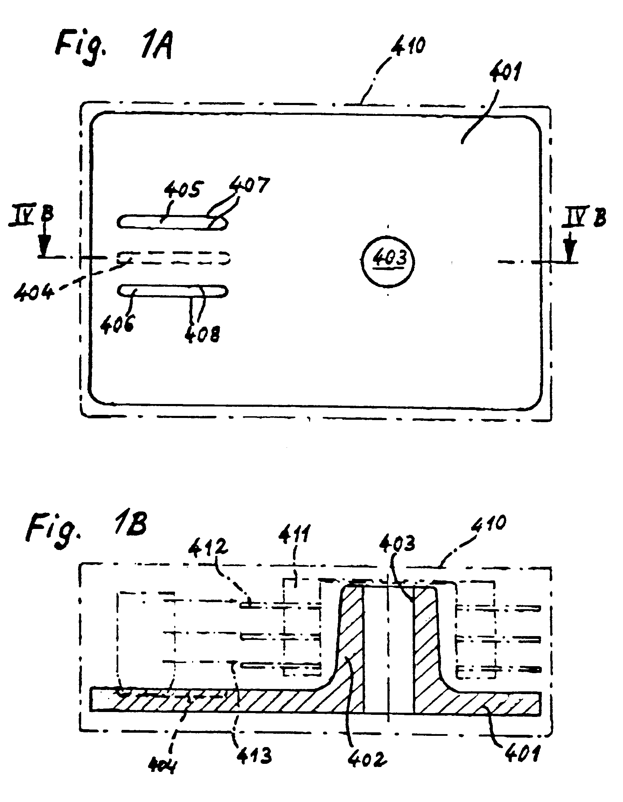

Fig. 1 zeigt in Draufsicht (Fig. 1A) und im Schnitt (Fig. 1B) ein integriertes Antriebssystem für Festplattenspeicher. Ein Gerätechassis 401 weist einen senkrecht aus diesem hervorragenden Lagerführungszapfen 402 mit einer Lagerbohrung 403 auf. Strichpunktiert sind die äußeren Abmessungen eines Festplattenspeichergeräts 410 angedeutet. Ein sogenannter hub (Kern) 411 trägt Speicherplatten 412. Ebenfalls strichpunktiert dargestellte Abtastköpfe 413 werden von nicht gezeichneten voice-coil-Motoren bewegt, die in einem Schlitz 404 oder in mehreren Schlitzen 405, 406 an Seitenflächen 407, 408 geführt werden. Die Schlitze 404, 405, 406 werden zusammen mit der Lagerbohrung 403 in einer Aufspannung bearbeitet und halten dadurch eine genau zueinander definierte Lage. Der Schlitz 404 (gestrichelt) ist eine alternative Lösung zu den beiden Schlitzen 405, 406.

Die Schlitze 405, 406 verlaufen in vorbestimmtem Abstand parallel zueinander und konzentrisch zur Lagerbohrung 403, wenn man die Ebene gemäß Fig. 1A betrachtet, während im Alternativbeispiel mit nur einem Führungsschlitz 404 (gestrichelt) dieser im wesentlichen in Richtung Lagerbohrungsachse verläuft.

Das Gerätechassis 1 bzw. 401 ist somit Träger für alle aktiven und passiven Antriebsteile und zusätzlich benötigte Hilfsteile und kann gegebenenfalls auch eine (nicht dargestellte) Steuerelektronik aufnehmen.

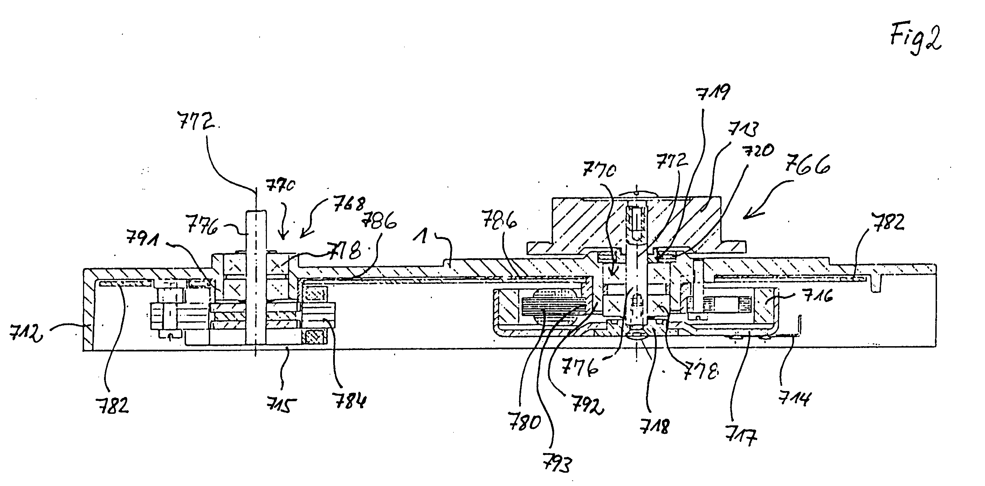

Fig. 2 zeigt ein weiteres Ausführungsbeispiel der Erfindung für einen Hartplattenspeicher mit einem voice-coil-Motor 768 und einem Plattenmotor 766. Bei diesen Motoren sind zwei Wellen 776 mit beispielsweise einem Durchmesser von 5 mm so gelagert, daß ihre Achsen 772 genau parallel zueinander verlaufen. Hierzu sind zwei Lager 770, die aus jeweils miteinander identischen Kugellagern 778 bestehen, an entsprechenden Lagerflächen des Gehäusechassis 1 angebracht. Der Motor 766 hat einen Stator 780, während der Motor 768 einen Stator 784 aufweist. Beide Statoren 780 und 784 sind an einer Leiterplatte 782 angebracht, welche außerdem zur Aufnahme von beispielsweise Hall-Elementen dient. Der eine Stator ist an der Leiterplatte 782 fixiert, der andere ist zum Toleranzausgleich mit minimalem Spiel an ihr verschieblich befestigt. Ein metallischer Abschirmring 786 ist um jeden der Statoren 780 und 784 zwischen diesen und dem Gehäusechassis 1 vorgesehen.

Die Leiterplatte 782 ist vorzugsweise lösbar an dem Gehäusechassis 1 befestigt. Die Lage des Stators 784 des voice-coil-Motors 768 kann z. B. mittels eines (nicht gezeigten) Dorns im Lager eingestellt werden, während der Rotor des Plattenmotors 766 mittels eines leitenden Klebstoffes in seiner Position verschraubt werden kann.

In dem Ausführungsbeispiel nach Fig. 2 ist ebenfalls wieder eine Chassis-Platte gezeigt, die im wesentlichen in einer Ebene verläuft, an welcher zwei zylindrische Ansätze angegossen sind. Auch bei diesem Hartplattenspeicher geht es darum, die um den sogenannten Hub-Motor 766 angeordneten Platten in einer hochgenauen über die Lebensdauer konstanten Position rotieren zu lassen, während der linke Voice-Coil-Motor 768 eine exakte Bewegung radial zur Achse des Motors 766 steuern oder ausführen muß, da eine hohe Spurdichte auf den um die Achse des Motors 766 rotierenden Speicherplatten eine sehr exakte radiale Position der Leseköpfe (wie angedeutet vom Motor 768 gesteuert und bewegt) ausführen muß. Lagerrohrartige hohlzylindrische Teile 791 und 792 sind einstückig mit der Chassisplatte 1 und (beide Lager) in einer Stufe bearbeitet. Damit sind die Wellen 776 bzw. die Achsen 772 möglichst exakt zueinander positioniert. Dies ist die Hauptforderung. Diesem Zweck dient natürlich, daß die Rotoren einwandfrei gelagert und gewuchtet, ohne Vibration zu erzeugen, um diese Achsen rotieren. Die Statoren werden jeweils diesen Achsen sozusagen zugeordnet, indem sie mit ausreichender Genauigkeit so montiert werden, daß die vorgeschriebenen Luftspaltabstände zwischen Statoren und Rotoren eingehalten werden. Der Stator des Motors 766 ist relativ exakt auf den Lagerrohransatz 792 aufgesetzt (indem z. B. hier eine Außensitzfläche 793 auch in der gleichen Arbeitsstufe mit angebracht wird. Die Genauigkeit des Stators des Hub-Motors muß also relativ hoch sein.

Der Innenstator des Außenläufer-Hub-Motors 766 kann aber relativ bequem und genau auf dem Lagerrohrsitz 793 angebracht werden. Unter der Chassis-Platte 1, axial sehr kompakt, liegt der Hub-Motor, der ein Durchmesser-Längen-Verhältnis von 5-10 : 1 hat, d. h., der Luftspaltdurchmesser ist das Fünf- bis Zehnfache der axialen Länge des Luftspaltes bzw. Ringmagneten. Etwa von gleicher axialer Höhe ist der Voice-Coil-Motor in dem sehr flachen Chassis 1 mit dem Rand 712, der die axiale Länge der Antriebsmotoren noch um einen Sicherheitsabstand 715 übergreift, angeordnet. Über der Platte ist beim Motor 766, der sogenannte Hub oder die Plattennabe 713 vorgesehen. Es versteht sich, daß der Außenläufermotor zu dieser Nabe 713 auch ein Innenläufer oder ein sogenannter Inhub-Motor sein kann, bei dem eine rotierende oder auch sogenannte stehende Welle einen Motor, der im Innern der Nabe angeordnet ist, trägt. Die Problematik mit der Lagersitzgenauigkeit ist dort die gleiche. Auch bei einem sogenannten Inhub-Motor bestehen die scharfen Toleranzvorschriften, und der Inhub-Motor ist praktisch nur als Aussenläufer ausbildbar, jedoch kann er mit einer rotierenden oder einer stehenden Welle versehen sein. Im Falle einer stehenden Welle wird diese selbst mit der erforderlichen Genauigkeit in einer Bohrung der Chassis-Platte 1 fixiert. Diese Lösung wird bevorzugt, wegen der extremen radialen Begrenzung (für den Außenhubdurchmesser ist ein standardisierter Durchmesser von z. B. 40 oder sogar 25,4 mm vorgeschrieben). Diese Lösung mit der festen Welle stellt, was die Motorleistung betrifft, in Verbindung mit der Raumausnützung eine vorteilhaftere Konstruktion dar.

In jedem Fall muß auch dann diese feste, nicht rotierende (oder auch rotierende) Welle entsprechend exakt in der Platte oder zur Plattenauflage positioniert sein. Der Hub-Motor zeigt einen Stahlbügel 714, der als ferromagnetisches Bauteil auf dem Außenrotor vor der Wuchtung angeordnet ist und in einen gegenüberliegenden magnetfeldempfindlichen Sensor pro Umdrehung einen Impuls induziert. Ein Permanentmagnetring 716 ist, evtl. auch in Halb- oder Viertelschalen, in eine Außenrotorglocke 717 eingeklebt, welche über ein Zwischenflanschteil 718 mit der Welle 776 verschraubt oder verklebt ist. Durch leitfähige Klebemittel oder durch stromleitfähige Ferrofluide an der Stelle 719 (Magnetdichtung 720 zwischen der Welle 776 und dem Chassis 1) wird einerseits das Lagersystem gegenüber dem Raum mit der Nabe 713, der einer hochgenauen Reinigkeitsforderung unterliegt, abgedichtet und andererseits gleichzeitig geerdet, d. h. es muß eine gewisse leitende Verbindung zwischen dem Rotor bzw. der Nabe und der Chassis-Platte hergestellt werden. Notfalls kann das auch im Lagerbereich durch eine, die Welle 716 spiralförmig umschlingende und auf ihr gleitende Metallfeder gelöst werden.

Die Magnetdichtung 720 ist axial ineinandergreifend im Innern der Nabe 713 so vorgesehen, daß sie in einer kleinen axialen Erhebung der Platte 1 liegt, so daß dadurch kein zusätzlicher Bauhöhenbedarf entsteht.

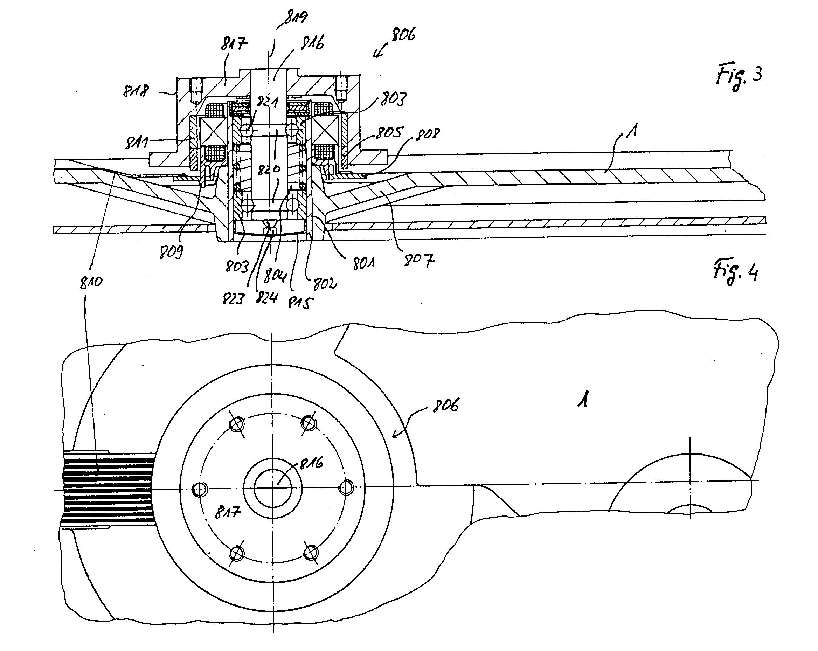

Die Fig. 3 und 4 bzw. 5 und 6 zeigen jeweils zwei weitere Ausführungsbeispiele der Erfindung für einen Hub-Motor, wie in Fig. 2 dargestellt, bei denen mit einer Lagerfläche 801 des aus Aluminium bestehenden Gehäusechassis 1 eine Stahlhülse 802 über einen 2 bis 20 µm dicken Klebstoffilm aus einer hochviskosen, anaerob aushärtenden Klebeflüssigkeit verbunden ist. In der Stahlhülse 802 liegen Kugellager 803, die mittels einer Feder 804 verspannt sind.

Zwischen den Ausführungsbeispielen der Fig. 3, 4 und 5, 6 besteht der Unterschied, daß drei bzw. sechs Platten aufgenommen werden können, wobei jedoch der gleiche Motor verwendet wird und auch die Elektronik einschließlich eines Signalmagneten 805 am unteren Rand der Außenrotorglocke 806 beibehalten werden kann.

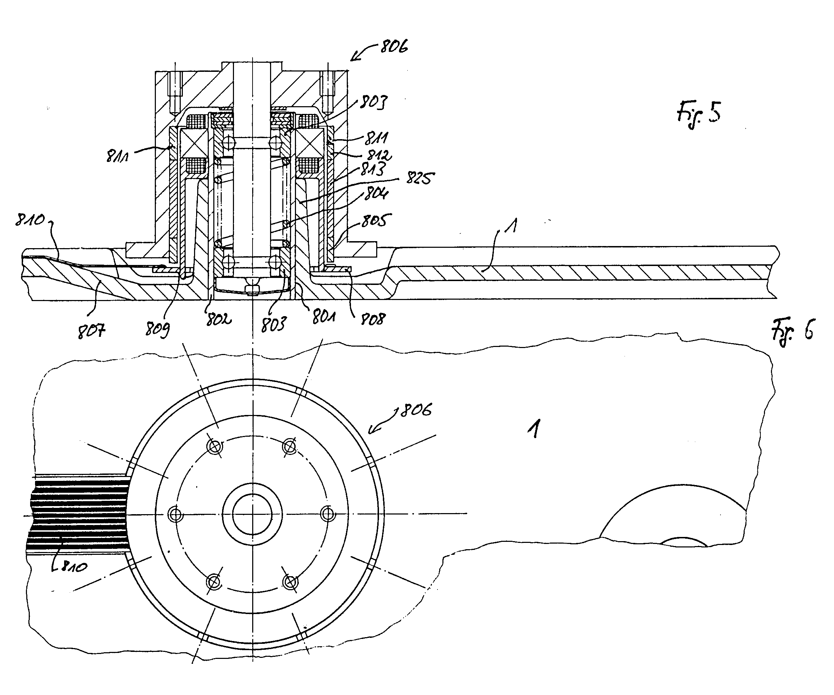

Um die Klebesitzfläche zu vergrößern, sitzt bei beiden Ausführungsbeispielen der Motor in einer Wanne 807 des Gerätechassis 1. Ebenso sind bei beiden Ausführungsbeispielen eine Leiterplatte 808, die über einen Schnappverschluß 809 festgelegt ist, in Aufsicht und Schnitt jeweils um 90° verdreht gezeichnete Anschlußleitungen 810 sowie Magnete 811 gleich. Bei dem Ausführungsbeispiel von Fig. 5, 6 ist zusätzlich noch ein unmagnetischer Distanzring 813 zwischen den Magneten 805 und 812 vorgesehen, und in Fig. 5 rechts ist der (linke) Magnetring 811 durch zwei axial halbierte Motormagnetringe 811, 812 ersetzt.

Durch die gemeinsame Bearbeitung der Lagerbohrungen, der Bezugsflächen und gegebenenfalls der Schlitze wird auf einfache Weise ein Höchstmaß an Genauigkeit erreicht, wobei gleichzeitig der Aufbau des Antriebssystems vereinfacht ist, da das Gerätechassis und beispielsweise Motorflansche einstückig ausgebildet sind.

Durch die Wanne 807, d. h. die Vertiefung, wird die Steifigkeit der Chassis-Platte 1 zusätzlich erhöht. Außerdem wird die Klebesitzlänge axial verlängert (Fläche 801). Am oberen Rand der Stahlhülse 802 befindet sich eine sogenannte Magnetdichtung, die in bekannter Weise mit magnetoliquider Flüssigkeit arbeitet. Die Welle 816 ist in die Nabe 817 konstant hochgenau eingepaßt. Die zylindrische Außenfläche 818 der Nabe 817 muß zur Achse 819 exakt koaxial sein. In die Welle 816 sind Laufrillen 820 für die Kugeln 821 der Lager eingelassen. Die Welle 816 wirkt wie ein Innenlaufring der Lager. Diese Lösung ist an sich bekannt. Die Welle 819 weist am unteren Ende eine Rundung 823 auf, welche im Zentrum (möglichst auch in der Achse 819) gegen ein Kunststoffklötzchen 824 nach Art eines Punktlagers anläuft. Über diese Punktlagerfläche wird die elektrostatische Aufladung des Rotors abgeführt auf eine federnde Kappe 815, die in der Stahlhülse 802 gehaltert ist. Durch die Vertiefung (Wanne 807) wird die Klebesitzfläche 801 mindestens auf die halbe axiale Länge der Stahlhülse erstreckt, ohne daß die Nabe 806 höher über die Chassis-Platte 1 hinausragt. Im Falle der Fig. 10 wird die zusätzliche Klebesitzlänge aufgrund der höheren Nabe (für mehr Platten) dadurch gewonnen, daß die lagerrohrartige Angußhülse 825 sich im Innern der Nabe verlängernd in die Konstruktion einfügt.

## Patentansprüche

1. Integriertes Antriebssystem für Festplattenspeicher mit
- zumindest einem Aufzeichnungsträger (412) und wenigstens einem bezüglich des Aufzeichnungsträgers (412) bewegbaren Schreib/Lesekopf (413), mit
- einem Gerätechassis (401),
- einem den Aufzeichnungsträger (412) in Rotation versetzenden Motor (766), der über eine Lagerstelle (403, 792) in dem Gerätechassis (1, 401) aufgenommen ist,
- einem den Schreib/Lesekopf (413) in Bewegung versetzenden Voice-coil-Motor (768), der über Lagerstellen und/oder Montageflächen (404 .. 408, 79) von dem Gerätechassis (1, 401) getragen ist, wobei
- das Gerätechassis (401) mit den Lagerstellen (403 .. 408) für die Motoren (766, 768) als ein Bauteil einstückig ausgeführt ist,
**dadurch gekennzeichnet, daß**
- die Lagerstelle (403) des den Aufzeichnungsträger (412) in Rotation versetzenden Motors (766) und die Lagerstellen und/oder die Montageflächen (404 .. 408, 79) des den Schreib/Lesekopf (413) in Bewegung versetzenden Voice-coil-Motors (768) in dem Gerätechassis (1, 401) in einer Arbeitsstufe hergestellt sind, und eine genaue vorbestimmte geometrische Beziehung mit hoher Genauigkeit zu einander einhalten,
- wobei der den Schreib/Lesekopf (413) in Bewegung versetzende Voice-coil-Motor (768) wenigstens in einer Lagerbohrung (79) konstanten Durchmessers oder an Montageflächen (407, 408) an der Oberfläche an dem Gerätechassis (1, 401) gehaltert ist, und
- der den Aufzeichnungsträger (412) in Rotation versetzende Motor (766) mit einer stehenden Welle in einer Lagerbohrung (792) konstanten Durchmessers oder an einer Montagefläche in dem Gerätechassis (1, 401) gelagert ist, oder
- der den Aufzeichnungsträger (412) in Rotation versetzende Motor (766) mit einer rotierenden Welle in einer Lagerbohrung (792) konstanten Durchmessers in dem Gerätechassis (1, 401) gelagert ist.

2. Integriertes Antriebssystem für Festplattenspeicher nach Anspruch 1, dadurch gekennzeichnet, daß die Welle des den Aufzeichnungsträger (412) in Rotation versetzenden Motor (766) und die Lagerbohrung des den Schreib/Lesekopf (413) in Bewegung versetzenden Voice-coil-Motor (768) parallel zu einander verlaufen.

3. Integriertes Antriebssystem für Festplattenspeicher nach Anspruch 1, dadurch gekennzeichnet, daß die Welle des den Aufzeichnungsträger (412) in Rotation versetzenden Motor (766) und die Montagefläche des den Schreib/Lesekopf (413) in Bewegung versetzenden Voice-coil-Motor (768) rechtwinklig zu einander verlaufen.

4. Integriertes Antriebssystem für Festplattenspeicher nach einem oder mehreren der Ansprüche 1 bis 3, dadurch gekennzeichnet, daß die Verbindung zwischen der Welle des den Aufzeichnungsträger (412) in Rotation versetzenden Motors (766) und dessen Lagerbohrung (792) und/oder die Verbindung zwischen der Montagefläche des den Schreib/Lesekopf (413) in Bewegung versetzenden Voice-coil-Motor (768) und dem Voice-coil-Motor (768) durch Klebung gebildet sind.

5. Integriertes Antriebssystem für Festplattenspeicher nach Anspruch 4, dadurch gekennzeichnet, daß die Verbindung durch einen Klebstoff-Film mit einer Dicke von 2 µm bis 30 µm, vorzugsweise 2 µm bis 20 µm dick ist.

6. Integriertes Antriebssystem für Festplattenspeicher nach Anspruch 4, dadurch gekennzeichnet, daß der Klebstoff-Film durch eine hochviskose anaerobe Klebeflüssigkeit gebildet ist.

7. Integriertes Antriebssystem für Festplattenspeicher nach einem oder mehreren der Ansprüche 1 bis 6, dadurch gekennzeichnet, daß der den Aufzeichnungsträger in Rotation versetzende Motor durch eine mit der Lagerbohrung verbundene Hülse an dem Chassis angebracht ist.

8. Integriertes Antriebssystem für Festplattenspeicher nach den Ansprüchen 4 und 7, dadurch gekennzeichnet, daß die Hülse mit der Lagerbohrung verklebt ist.

9. Integriertes Antriebssystem für Festplattenspeicher nach einem oder mehreren der Ansprüche 1 bis 8, dadurch gekennzeichnet, daß der den Aufzeichnungsträger (412) in Rotation versetzende Motor (766) wenigstens teilweise in einer in dem Gerätechassis vorgesehenen, vorzugsweise nach außen ragenden, wannenartigen Vertiefung angeordnet ist.

10. Integriertes Antriebssystem für Festplattenspeicher nach einem oder mehreren der Ansprüche 1 bis 9, dadurch gekennzeichnet, daß der den Aufzeichnungsträger (412) in Rotation versetzende Außenrotor des Motors (806) von der Nabe des Aufzeichnungsträgers umgeben ist.

11. Integriertes Antriebssystem für Festplattenspeicher nach einem oder mehreren der Ansprüche 1 bis 10, dadurch gekennzeichnet, daß die Welle (816) des den Aufzeichnungsträger (412) in Rotation versetzenden Motors Laufrillen (820) für Lagerkugeln (821) aufweist.

12. Integriertes Antriebssystem für Festplattenspeicher nach Anspruch 11, dadurch gekennzeichnet, daß Außenlaufringe für zwei Lager (803) in einer Hülse aufgenommen sind, die in die Lagerbohrung (791, 792) eingesetzt sind.

13. Integriertes Antriebssystem für Festplattenspeicher nach einem oder mehreren der Ansprüche 1 bis 12, dadurch gekennzeichnet, daß das Gerätechassis (401) senkrecht aus diesem hervorragende Lagerführungszapfen (402) mit einer Lagerbohrung (403) aufweist.

14. Integriertes Antriebssystem für Festplattenspeicher nach einem oder mehreren der Ansprüche 1 bis 12, dadurch gekennzeichnet, daß lagerrohrartige hohlzylindrische Teile (791, 792) einstückig in der Chassisplatte (1) vorgesehen sind.

15. Integriertes Antriebssystem für Festplattenspeicher nach einem oder mehreren der Ansprüche 1 bis 13, dadurch gekennzeichnet, daß eine lagerrohrartige Angußhülse (825) in das Innere der Nabe ragt.

16. Integriertes Antriebssystem für Festplattenspeicher nach einem oder mehreren der vorhergehenden Ansprüche, dadurch gekennzeichnet, daß der Innenstator des Außenläufermotors (766) auf einem Lagerrohrsitz (793) angebracht ist.

17. Integriertes Antriebssystem für Festplattenspeicher nach einem oder mehreren der vorhergehenden Ansprüche, dadurch gekennzeichnet, daß das Chassis (1) einen Rand (712) aufweist, der die axiale Lage der Antriebsmotoren mit einem Sicherheitsabstand übergreift.

18. Verfahren zur Herstellung eines integrierten Antriebssystemes für Festplattenspeicher mit
- zumindest einem Aufzeichnungsträger (412) und wenigstens einem bezüglich des Aufzeichnungsträgers (412) bewegbaren Schreib/Lesekopf (413), mit
- einem Gerätechassis (401),
- einem den Aufzeichnungsträger (412) in Rotation versetzenden Motor (766), der über eine Lagerstelle (403, 792) in dem Gerätechassis (1, 401) aufgenommen wird,
- einem den Schreib/Lesekopf (413) in Bewegung versetzenden Voice-coil-Motor (768), der über Lagerflächen und/oder Montageflächen (404 .. 408, 79) von dem Gerätechassis (1, 401) getragen wird, wobei
- das Gerätechassis (401) mit den Lagerflächen und/oder den Montageflächen (404 .. 408) für die Motoren (766, 768) als ein Bauteil einstückig ausgeführt wird,
**dadurch gekennzeichnet, daß**
- die Lagerbohrung (403) des den Aufzeichnungsträger (412) in Rotation versetzenden Motors (766) und die Lagerflächen und/oder die Montageflächen (404 .. 408, 79) des den Schreib/Lesekopf (413) in Bewegung versetzenden Voice-coil-Motors (768) in dem Gerätechassis (1, 401) in einer Arbeitsstufe hergestellt werden, und eine genaue vorbestimmte geometrische Beziehung mit hoher Genauigkeit zu einander einhalten, wobei der den Schreib/Lesekopf (413) in Bewegung versetzende Voice-coil-Motor (768) wenigstens in einer Lagerbohrung (79) konstanten Durchmessers oder an Montageflächen (407, 408) an der Oberfläche an dem Gerätechassis (1, 401) gehaltert wird, und der den Aufzeichnungsträger (412) in Rotation versetzende Motor (766) mit einer stehenden Welle in einer Lagerbohrung (792) konstanten Durchmessers oder an einer Montagefläche in dem Gerätechassis (1, 401) gelagert wird, oder der den Aufzeichnungsträger (412) in Rotation versetzende Motor (766) mit einer rotierenden Welle in einer Lagerbohrung (792) konstanten Durchmessers in dem Gerätechassis (1, 401) gelagert wird.

## Claims

1. An integrated driving system for fixed-disc memories with
- at least one recording carrier (412) and at least one write/read head (413) adapted for movement in respect of the recording carrier (412), with
- a device chassis (401),
- a motor (766) imparting rotation to the recording carrier (412) and housed in the device chassis (1, 401) via bearings (403, 792),
- a voice-coil motor (768) imparting movement to the write/read head (413) and supported by the device chassis (1, 401) via bearings and/or mounting surfaces (404 ... 408, 791), whereby
- the device chassis (401) is constructed in one piece with the bearings (403 ... 408) for the motors (766, 768) as one component, characterised in that
- the bearing (403) of the motor (766) imparting rotation to the recording carrier (412) and the bearings and/or mounting surfaces (404... 408, 791) of the voice-coil motor (768) imparting movement to the write/read head (413) in the device chassis (1, 401) are produced in one working stage and maintain a precisely determined geometric relationship to one another with a high degree of precision,
- whereby the voice-coil motor (768) imparting movement to the write/read head (413) is supported in at least one bearing bore (791) of constant diameter or on mounting surfaces (407, 408) of the surface on the device chassis (1, 401), and
- the motor (766) with a fixed shaft, imparting rotation to the recording carrier (412) is mounted in a bearing bore (792) of constant diameter or on a mounting surface in the device chassis (1, 401), or
- the motor (766) with a rotating shaft, imparting rotation to the recording carrier (412) is mounted in the device chassis (1, 401) in a bearing bore (792) of constant diameter.

2. An integrated driving system for fixed disc memories, according to claim 1, characterised in that the shaft of the motor (766) imparting rotation to the recording carrier (412) and the bearing bore of the voice-coil motor (768) imparting movement to the write/read head (413) extend parallel with each other.

3. An integrated driving system for fixed disc memories according to claim 1, characterised in that the shaft of the motor (766) imparting rotation to the recording carrier (412) and the mounting surface of the voice-coil motor (768) imparting movement to the write/read head (413) extend at right-angles to each other.

4. An integrated driving system for fixed disc memories according to one or more of claims 1 to 3, characterised in that the connection between the shaft of the motor (766) imparting rotation to the recording carrier (412) and the bearing bore (792) thereof and/or the connection between the mounting surface of the voice-coil motor (768) imparting movement to the write/read head and the voice-coil motor (768) are formed by adhesion.

5. An integrated driving system for fixed disc memories according to claim 4, characterised in that the connection is by a film of adhesive 2 µm to 30 µm and preferably 2 µm to 20 µm thick.

6. An integrated driving system for fixed disc memories according to claim 4, characterised in that the film of adhesive is formed by a highly viscous anaerobic liquid adhesive.

7. An integrated driving system for fixed disc memories according to one or more of claims 1 to 6, characterised in that the motor imparting rotation to the recording carrier is mounted on the chassis by a sleeve connected to the bearing bore.

8. An integrated driving system for fixed disc memories according to claims 4 and 7, characterised in that the sleeve is glued to the bearing bore.

9. An integrated driving system for fixed disc memories according to one or more of claims 1 to 8, characterised in that the motor (766) imparting rotation to the recording carrier (412) is at least partially disposed in a preferably outwardly protruding trough-like depression provided in the device chassis.

10. An integrated driving system for fixed disc memories according to one or more of claims 1 to 9, characterised in that the external rotor of the motor (806) imparting rotation to the recording carrier (412) is enclosed by the hub of the recording carrier.

11. An integrated driving system for fixed disc memories according to one or more of claims 1 to 10, characterised in that a shaft (816) of the motor imparting rotation to the recording carrier (412) comprises grooves (820) for bearing balls (821).

12. An integrated driving system for fixed disc memories according to claim 11, characterised in that external races for two bearings (803) are accommodated in one sleeve, the sleeves being inserted into the bearing bore (791, 792).

13. An integrated driving system for fixed disc memories according to one or more of claims 1 to 12, characterised in that the device chassis (401) has projecting at right-angles therefrom bearing guide journals (402) with a bearing bore (403).

14. An integrated driving system for fixed disc memories according to one or more of claims 1 to 12, characterised in that bearing tube-like hollow cylindrical parts (791, 792) are provided in one piece in the chassis plate (1).

15. An integrated driving system for fixed disc memories according to one or more of claims 1 to 13, characterised in that a bearing tube-like stalk (825) projects into the interior of the hub.

16. An integrated driving system for fixed disc memories according to one or more of the preceding claims, characterised in that the interior stator of the external rotor motor (766) is mounted on a bearing tube seat (793).

17. An integrated driving system for fixed disc memories according to one or more of the preceding claims, characterised in that the chassis (1) has an edge (712) which engages with a safety margin over the axial position of the driving motors.

18. A method of producing an integrated driving system for fixed disc memories with
- at least one recording carrier (412) and at least one write/read head (413) adapted for movement in respect of the recording carrier (412) with
- a device chassis (401)
- a motor (766) imparting rotation to the recording carrier (412) and housed in the device chassis (1, 401) via a bearing (403, 792),
- a voice-coil motor (768) imparting movement to the write/read head (413) and which is supported by the device chassis (1, 401) via bearing surfaces and/or mounting surfaces (404 ... 408, 791), whereby
- the device chassis (401) is constructed in one piece with the bearing surfaces and/or the mounting surfaces (404 ... 408) for the motors (766, 768) as one component, characterised in that
- the bearing bore (403) of the motor (766) imparting rotation to the recording carrier (412) and the bearing surfaces and/or the mounting surfaces (404 ... 408, 791) of the voice-coil motor (768) imparting movement to the write/read head and mounted in the device chassis (1, 401) are produced in one working stage and maintain an exactly predetermined geometrical relationship to one another with a high degree of precision, whereby the voice-coil motor (768) imparting movement to the write/read head (413) is supported at least in a bearing bore (791) of constant diameter or on mounting surfaces (407, 408) of the surface of the device chassis (1, 401) and the motor (766) with a fixed shaft, imparting rotation to the recording carrier (412), is mounted in the device chassis (1, 401) in a bearing bore (792) of constant diameter or on a mounting surface, or the motor (766) with a rotating shaft, imparting rotation to the recording carrier (412), is mounted in the device chassis (1, 401) in a bearing bore (792) of constant diameter.

## Revendications

1. Système d'entraînement intégré pour mémoire à disque dur, comportant :
- au moins un support d'enregistrement (412) et au moins une tête d'écriture/lecture (413) mobile par rapport au support d'enregistrement (412), avec
- un châssis (401) pour les appareils,
- un moteur (766) qui entraîne en rotation le support d'enregistrement (412) et qui est logé dans le châssis des appareils (1, 401) par l'intermédiaire d'une monture (403, 792),
- un moteur "Voice-coil" (768) qui entraîne la tête d'écriture/lecture (413) et qui est porté par le châssis des appareils (1, 401) par l'intermédiaire de montures et/ou de surfaces de montage (404 ... 408, 791),
- le châssis pour les appareils (401) avec les montures (403...408) pour les moteurs (766,768) étant réalisé en une seule pièce, pour constituer un élément à monter dans l'ensemble considéré,
caractérisé en ce que :
- la monture (403) du moteur (766) qui entraîne en rotation le support d'enregistrement (412), ainsi que les montures et/ou surfaces de montage (404...408,791) du moteur "Voice-coil" (768) qui entraîne la tête d'écriture/lecture (413) sont réalisées en une opération dans le châssis des appareils (1,401), et ont entre elles une relation géométrique précise et prédéterminée, de haute précision,
- en ce que le moteur "Voice-coil" (768) qui entraîne la tête d'écriture/lecture (413) est retenu dans au moins un alésage (791) de diamètre constant ou fixé à des surfaces de montage (407,408) prévues à la surface du châssis des appareils (1,401) ,
- et en ce que le moteur (766) qui entraîne en rotation le support d'enregistrement (412) est monté avec un arbre fixe engagé dans un alésage de diamètre constant (791) prévu dans le châssis de montage des appareils (1,401), ou fixé à une surface de montage de ce châssis,
- ou en ce que le moteur (766) qui entraîne en rotation le support d'enregistrement (412) est monté avec un arbre fixe engagé dans un alésage de diamètre constant (792) prévu dans le châssis des appareils (1,401).

2. Système d'entraînement intégré pour mémoire à disque dur selon la revendication 1, caractérisé en ce que l'arbre du moteur (766) qui entraîne en rotation le support d'enregistrement (412) et l'alésage où se monte le moteur "Voice-coil" (768) qui entraîne la tête d'écriture/lecture (413) sont orientés parallèlement l'un à l'autre.

3. Système d'entraînement intégré pour mémoire à disque dur selon la revendication 1, caractérisé en ce que l'arbre du moteur (766) qui entraîne en rotation le support d'enregistrement (412) et la surface de montage du moteur "Voice-coil" (768) qui entraîne la tête d'écriture/lecture (413) sont orientés perpendiculairement l'un à l'autre.

4. Système d'entraînement intégré selon l'une ou plusieurs des revendications 1 à 3, caractérisé en ce que la liaison entre l'arbre du moteur (766) qui entraîne en rotation le support d'enregistrement (412) et l'alésage (792) prévu pour le recevoir, et/ou la liaison entre la surface de montage du moteur "Voice-coil" (768) qui entraîne la tête d'écriture/lecture (413) et ce moteur "Voice-coil" (768) sont réalisées par collage.

5. Système d'entraînement intégré pour mémoire à disque dur selon la revendication 4, caractérisé en ce que la liaison assurée par un film de matière adhésive a une épaisseur de 2 µm à 30 µm, cette épaisseur ayant de préférence une valeur de 2 µm à 20 µm.

6. Système d'entraînement intégré pour mémoire à disque dur selon la revendication 4, caractérisé en ce que le film de matière adhésive est constitué par un film de colle liquide anaérobie de haute viscosité.

7. Système d'entraînement intégré pour mémoire à disque dur selon l'une ou plusieurs des revendications 1 à 6, caractérisé en ce que le moteur qui entraîne en rotation le support d'enregistrement est fixé au châssis par une douille reliée à l'alésage servant de logement.

8. Système d'entraînement intégré pour mémoire à disque dur selon les revendications 4 et 7, caractérisé en ce que la douille est fixée par collage à l'alésage qui sert de logement.

9. Système d'entraînement intégré pour mémoire à disque dur selon l'une ou plusieurs des revendications 1 à 8, caractérisé en ce que le moteur (766) qui entraîne en rotation le support d'enregistrement (412) est monté au moins en partie dans un logement en creux en forme de cuvette prévu dans le châssis des appareils, et de préférence en saillie vers l'extérieur.

10. Système d'entraînement intégré pour mémoire à disque dur selon l'une ou plusieurs des revendications 1 à 9, caractérisé en ce que le rotor extérieur du moteur (806) qui entraîne en rotation le support d'enregistrement (412) est entouré par le moyeu du support d'enregistrement.

11. Système d'entraînement intégré pour mémoire à disque dur selon l'une ou plusieurs des revendications 1 à 10, caractérisé en ce que l'arbre (816) du moteur qui entraîne en rotation le support d'enregistrement (412) présente des gorges de roulement (820) pour les billes d'un palier (821).

12. Système d'entraînement intégré pour mémoire à disque dur selon la revendication 11, caractérisé en ce qu'il comporte deux bagues de roulement extérieures pour deux paliers (803), qui sont tenues dans une douille montée dans l'alésage où se logent ces paliers (791,792).

13. Système d'entraînement intégré pour mémoire à disque dur selon l'une ou plusieurs des revendications 1 à 12, caractérisé en ce que le châssis (401) porte un bossage de guidage de palier (402) en saillie verticale sur le châssis et pourvu d'un alésage (403) pour recevoir un palier.

14. Système d'entraînement intégré pour mémoire à disque dur selon l'une ou plusieurs des revendications 1 à 12, caractérisé en ce qu'il comporte des parties en forme de cylindres creux (791,792) analogues à des logements tubulaires de paliers et venues d'une seule pièce avec la plaque (1) du châssis.

15. Système d'entraînement intégré pour mémoire à disque dur selon l'une ou plusieurs des revendications 1 à 13, caractérisé en ce qu'il comporte une douille (825) venue de fonderie, analogue à un logement tubulaire de palier et engagée en saillie à l'intérieur du moyeu.

16. Système d'entraînement intégré pour mémoire à disque dur selon l'une ou plusieurs des revendications précédentes, caractérisé en ce que le stator interne du moteur à rotor externe (766) est monté dans un logement tubulaire (793).

17. Système d'entraînement intégré pour mémoire à disque dur selon l'une ou plusieurs des revendications précédentes, caractérisé en ce que le châssis (1) comporte un rebord (712) qui dépasse au-delà de la position axiale des moteurs d'entraînement avec un écart de sécurité.

18. Procédé pour réaliser un système d'entraînement intégré pour mémoire à disque dur, comportant :
- au moins un support d'enregistrement (412) et au moins une tête d'écriture/lecture (413) mobile par rapport au support d'enregistrement (412), avec
- un châssis pour les appareils (401),
- un moteur (766) qui entraîne en rotation le support d'enregistrement (412) et qui se fixe dans le châssis des appareils (1,401) par l'intermédiaire d'une monture (403,792),
- un moteur "Voice-coil" (768) qui entraîne la tête d'écriture/lecture (413) et qui est porté par le châssis des appareils (1,401) par l'intermédiaire de surfaces de portage et/ou de surfaces de montage (404...408, 791), le châssis pour les appareils (401) avec les surfaces de portage et/ou les surfaces de montage (404...408) prévues pour les moteurs (766,768) étant réalisé d'une seule pièce pour constituer un élément à monter dans l'ensemble considéré,
caractérisé en ce que
- l'alésage (403) prévu pour recevoir le palier du moteur (766) qui entraîne en rotation le support d'enregistrement (412), ainsi que les surfaces de portage et/ou les surfaces de montage (404...408,791) du moteur "Voice-coil" (768) qui entraîne la tête d'écriture/lecture (413) sont réalisés dans le châssis des appareils (1,401) en une seule opération d'usinage, ces logements et surfaces de montage ayant entre eux une relation géométrique précise et prédéterminée, de haute précision, et le moteur "Voice-coil" (768) qui assure le mouvement de la tête d'écriture/lecture (413) étant monté dans au moins un alésage de diamètre constant (791) qui sert de logement, ou posé sur des surfaces de montage (407,408) prévues à la surface du châssis, tandis que le moteur (766) qui entraîne en rotation le support d'enregistrement (412) est monté dans le châssis des appareils (1,401) avec son arbre fixe engagé dans un alésage (792) de diamètre constant, ou fixé sur une surface de montage ménagée dans le châssis (1,401), ou que le moteur (766) qui entraîne en rotation le support d'enregistrement (412) comporte un arbre tournant engagé dans un alésage de diamètre constant (792) qui sert de logement pour un palier de cet arbre du moteur ainsi monté sur le châssis des appareils (1,401).
